(19)

Europäisches
Patentamt

European
Patent Office

Office européen
des brevets

(11)  **EP 3 629 532 B1**

(12)  **EUROPEAN PATENT SPECIFICATION**

(45) Date of publication and mention
of the grant of the patent:
**01.05.2024   Bulletin 2024/18**

(21) Application number: **18827547.3**

(22) Date of filing: **04.07.2018**

(51) International Patent Classification (IPC):
**H04L 45/24** *(2022.01)*

(52) Cooperative Patent Classification (CPC):
**H04L 45/24; H04L 47/125**

(86) International application number:
**PCT/CN2018/094476**

(87) International publication number:
**WO 2019/007361 (10.01.2019 Gazette 2019/02)**

(54) **LOAD SHARING METHOD AND APPARATUS, ROUTING DEVICE AND STORAGE MEDIUM**

LASTTEILUNGSVERFAHREN UND -VORRICHTUNG, ROUTINGVORRICHTUNG UND
SPEICHERMEDIUM

PROCÉDÉ ET APPAREIL DE PARTAGE DE CHARGE, DISPOSITIF DE ROUTAGE ET SUPPORT
DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **04.07.2017   CN 201710535576**

(43) Date of publication of application:
**01.04.2020   Bulletin 2020/14**

(73) Proprietor: **ZTE Corporation
Shenzhen, Guangdong 518057 (CN)**

(72) Inventor: **SHEN, Yiming
Shenzhen
Guangdong 518057 (CN)**

(74) Representative: **Canzler & Bergmeier
Patentanwälte
Partnerschaft mbB
Despag-Straße 6
85055 Ingolstadt (DE)**

(56) References cited:
WO-A1-2017/112338        CN-A- 101 330 433
CN-A- 101 753 463        CN-A- 103 580 842
US-A1- 2005 276 263        US-A1- 2015 382 279

• CONANT G E: "MULTILINK PPP: ONE BIG
VIRTUAL WAN PIPE", DATA COMMUNICATIONS,
MCGRAW HILL. NEW YORK, US, vol. 24, no. 13,
21 September 1995 (1995-09-21), pages 85-88, 90,
XP000526197, ISSN: 0363-6399

**Description**

**TECHNICAL FIELD**

The present disclosure relates to the field of communications, and in particular, to a load sharing method and device, a routing device, and a storage medium.

**BACKGROUND**

Load sharing is a conventional forwarding model for routers. A router binds a plurality of physical interfaces of a same type or different types into a forwarding group, and forwarding packets are output through physical interfaces of the members the forwarding group in per-packet or per-flow mode. In such model, the ratio among packets shared by member interfaces is expected to be the same as the ratio among physical bandwidths of the physical interfaces of the members, so that the utilization rates of the interfaces are close to each other, the utilization rate of the interface bandwidth can be improved to the maximum extent without losing packets, and investment cost is saved for operators.
In a case where the load sharing members are physical links of a same type (protocol in a layer 1), even if the physical links have different rates, because the physical links have a same packet carrying efficiency, the sharing ratio among the members may have a fixed multiple relationship, and thus uniformity of load sharing can be realized easily. However, in a case where the load sharing members are heterogeneous physical links (e.g., combination of ETH_LAN, ETH_WAN, and POS_PPP), it is difficult to achieve uniformity of load sharing among members due to differences in the carrying efficiency of the respective physical links. Since packet lengths of the forwarding models are different, the bandwidth utilization rates of the interfaces of the heterogeneous link members differ a lot, which brings challenge to reasonable allocation and utilization of bandwidth resources. If binding of heterogeneous physical links to a same load sharing group is intentionally avoided during networking planning, the network planning and usage of the network are limited, which causes inconvenience.
A US patent application, whose publication number is US2015/382279A1, discloses a method and a system for a parallel transmission of plural types of wireless links. The method includes: activating at least two different types of wireless links in advance; allocating transmission data to the wireless links at a signal source end according to transmission rates of the wireless links; and transmitting the allocated transmission data to the wireless links in parallel via the wireless links, so as to transmit the transmission data to a receiving end. In the method and system, the data is transmitted via the plural wireless links in parallel, the transmission abilities of the wireless links are sufficiently utilized, and the transmission rate of the data is significantly increased. Since the wireless links are sufficiently utilized, a user's experience is enhanced.

**SUMMARY**

The invention is set out in the appended set of claims.

**BRIEF DESCRIPTION OF THE DRAWINGS**

The accompanying drawings described herein serve to provide a further understanding of the present disclosure and constitute a part of the present disclosure, and exemplary embodiments of the present disclosure and description thereof serve to explain the present disclosure and not to limit the present disclosure. In the drawings:

Fig. 1 is a flowchart of a load sharing method according to an embodiment of the present disclosure;
Fig. 2 is a detailed flowchart of an example of a load sharing method according to an embodiment of the present disclosure; and
Fig. 3 is a schematic structural diagram of a load sharing device according to an embodiment of the present disclosure.

**DETAILED DESCRIPTION**

The present disclosure is described in detail below with reference to the accompanying drawings. It should be understood that the specific embodiments described herein merely serve to explain the present disclosure and do not limit the present disclosure.

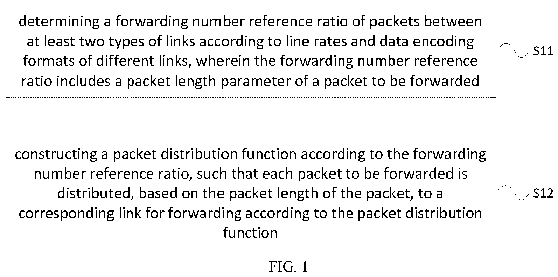

Fig. 1 is a flowchart of a load sharing method according to an embodiment of the present disclosure.
As shown in Fig. 1, a load sharing method according to an embodiment of the present disclosure may include steps S11 and S12.
In step S11, a forwarding number reference ratio of packets between at least two types of links is determined according to line rates and data encoding formats of different links, wherein the forwarding number reference ratio includes a packet length parameter of a packet to be forwarded.

In step S12, a packet distribution function is constructed according to the forwarding number reference ratio, such that each packet to be forwarded is distributed, based on the packet length of the packet, to a corresponding link for forwarding according to the packet distribution function.

According to the load sharing method of the embodiment of the present disclosure, since the packet distribution function contains the packet length parameter, the length of the packet can be considered as an influence factor when allocating a forwarding link for each packet, so that packets with different lengths can be properly distributed, and different links of various types are load balanced.

According to an embodiment of the present disclosure, in step S11, different types of links may have different line rates and different data encoding formats, and thus, the number of packets that can be transmitted by each type of link in unit time may also be different. According to the line rates and the data encoding formats of different links, the number of packets forwarded by each type of link in unit time can be determined, and the forwarding number reference ratio of packets among various types of links may be obtained through comparison.

According to an embodiment of the present disclosure, links for forwarding packets may include a POS_PPP (Packet over SONET/SDH_Point-to-Point Protocol) link, an Ethernet Local Area Network (ETH_LAN) link, an Ethernet Wide Area Network (ETH_WAN) link, and the like, but the present disclosure is not limited thereto. In a routing system, the three types of links may be combined to form a load sharing group, and packets in the system may be shared by the three types of links in a balanced manner. When the load sharing group includes the POS_PPP link and at least one of the ETH_LAN link and the ETH_WAN, the load sharing group includes heterogeneous physical links.

Thereinafter, it is described how to determine the forwarding number reference ratio of packets for each type of link by taking a POS_PPP link, an ETH_LAN link, and an ETH_WAN link as examples.

In the example, $X\_L$, $X\_W$ and $X\_P$ represent packet sharing numbers of 10G LAN, 10G WAN, and 10G POS, respectively; $Len\_l2$ and $Len\_l3$ represent byte lengths of a packet to be forwarded in layer 2 and layer 3, respectively; $Len\_ipg$ represents the length of an Inter-Packet Gap (IPG) of an Ethernet (ETH), where $Len\_ipg = 12$ bytes; $Len\_pre$ represents the length of a Preamble of the ETH, where $Len\_pre = 8$ bytes; $Len\_fcs$ represents the length of a Frame Checksum Sequence of the ETH, where $Len\_fcs = 4$ bytes; $Len\_crc$ represents the CRC length of a POS, where $Len\_crc = 4$ bytes; and $Len\_e$ represents the length of a start-stop symbol of the POS, where $Len\_e = 1$ byte.

1) For an actual ETH_LAN interface, the following formula holds:

$$10.3125 * (64/66) = (Len\_l2 + Len\_ipg + Len\_pre + Len\_fcs) * 8 * X\_L$$

It can be calculated that:

$$10.3125 * (64/66) = (Len\_l3 + 38) * 8 * X\_L$$

(for the ETH, $Len\_l2 = Len\_l3 + 14$)
thus:

$$X\_L = [10.3125 * (64/66)] / [8 * (Len\_l3 + 38)]$$

2) For an actual ETH_WAN interface, the following formula holds:

$9.95328 * (64/66) * (26/27) = (Len\_l2 + Len\_ipg + Len\_pre + Len\_fcs) * 8 * X\_W$
It can be calculated that:

$$9.95328 * (64/66) * (26/27) = (Len\_l3 + 38) * 8 * X\_W$$

(for the ETH, $Len\_l2 = Len\_l3 + 14$)
thus:

$$X\_W = [9.95328 * (64/66) * (26/27)] / [8 * (Len\_l3 + 38)]$$

3) For an actual POS interface, the following formula holds:

$$9.95328 * (26/27) = (Len\_l2 + Len\_e + Len\_crc) * 8 * X\_P$$

It can be calculated that:

$$9.95328 * (26/27) = (Len\_l3 + 9) * 8 * X\_P$$

(for the POS, Len_l2= Len_l3+4)
thus:

$$X\_P = [9.95328 * (26/27)] / [8 * (Len\_l3 + 9)]$$

In the above formulas:

64/66 represents 64/66 encoding during transmission in a physical layer, namely, 66 bits are actually required to transmit 64 bits of data;
26/27 is the utilization rate in Synchronous Digital Hierarchy (SDH) packet by excluding a management frame; and
10.3125 and 9.95328 are the fixed line rates of LAN and SDH, respectively.

In order to balance link loads, the sharing ratio is required to be equal to the bandwidth ratio, and the sharing ratio between heterogeneous physical links having a same rate is as follows:

$$X\_L : X\_W = 100:93$$

$$X\_L : X\_P = [100 * (Len\_l3 + 9)] : [96 * (Len\_l3 + 38)]$$

As can be seen from the formula, for POS_PPP and ETH_LAN with equal bandwidth, the sharing ratio may vary greatly as the packet length varies. For example, when Len_l3=64, the sharing ratio X_L: X_P is 0.74; and when Len_l3=1500, the sharing ratio X_L: X_P is 1.02. Therefore, sharing error may be very large for packets with different lengths.

In order to improve the above situation, according to the embodiments of the present disclosure, packets are not distributed according to a fixed ratio, instead, a packet distribution function is constructed according to the forwarding number reference ratio, so that each packet to be forwarded is distributed, based on its length, to a corresponding link for forwarding according to the packet distribution function.

According to an embodiment of the present disclosure, a method for constructing the packet distribution function may include: acquiring a total bandwidth of all forwarding interfaces of each type of link in a load sharing group; determining a forwarding number sharing ratio among all types of links in the load sharing group according to the total bandwidth of each type of link and the forwarding number reference ratio; and constructing the packet distribution function according to the forwarding number sharing ratio.

The forwarding number reference ratio obtained in step S11 only provides a reference of packet forwarding numbers of several physical links of different types and having a same bandwidth, but multiple types of physical links may be included in a specific load sharing group, and each type of physical link may include interfaces with multiple bandwidths. In order to balance the load of each link, the bandwidths of all forwarding interfaces of each type of link in the load sharing group need to be added to obtain a total bandwidth, and then the forwarding number sharing ratio of all types of links in the load sharing group is determined according to the total bandwidth of each type of link and the forwarding number reference ratio.

For example, according to an embodiment of the present disclosure, for an ETH_LAN with 10G bandwidth and POS_PPP with 10G bandwidth, the forwarding number reference ratio is:

$$X\_L : X\_P = [100 * (Len\_l3 + 9)] : [96 * (Len\_l3 + 38)]$$

Assuming that one load sharing group includes two ETH_LANs each with 10G bandwidth, one ETH_LAN with 100G bandwidth, and one POS_PPP with 50G bandwidth, the total bandwidth of the ETH_LAN link is 120G, and the total bandwidth of the POS_PPP link is 50G. Correspondingly, the forwarding number sharing ratio between the ETH_LAN link and the POS_PPP link is:

$$[100* (Len\_l3+9) *120G/10G]: [96 * (Len\_l3+38) *50G/10G]$$

According to an embodiment of the present disclosure, the step of constructing the packet distribution function according to the forwarding number sharing ratio may include: mapping the forwarding number sharing ratio into different data intervals, which take the packet length as a parameter, within a first preset numerical range, respectively; acquiring, from the first preset numerical range, a corresponding random number for each packet to be forwarded (per-packet mode) or each flow (per-flow mode) in the packet to be forwarded; and selecting a data interval within the first preset numerical range according to the random number and the packet length, and distributing the packet to be forwarded to a type of link corresponding to the data interval.

According to an embodiment of the present disclosure, after selecting the data interval within the first preset numerical range according to the random number and the packet length, and distributing the packet to be forwarded to the type of link corresponding to the data interval, the load sharing method may further include: mapping a ratio among bandwidths of all interfaces in the type of link into different data intervals in a second preset numerical range; and selecting a data interval within the second preset numerical range according to the random number, and distributing the packet to be forwarded to an interface corresponding to the data interval.

Thereinafter, a load sharing method according to an embodiment of the present disclosure is described in detail through a specific embodiment.

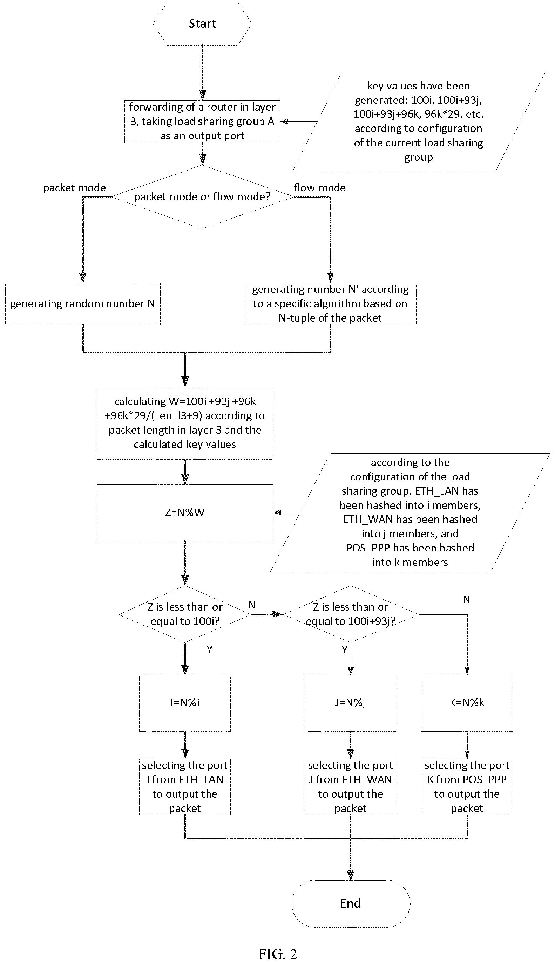

Fig. 2 is a detailed flowchart of an example of a load sharing method according to an embodiment of the present disclosure.

According to the above formulae, basic scheduling units of ETH_LAN, ETH_WAN and POS_PPP are set firstly, and the ratio of the basic scheduling units is as follows:

$$ETH\_LAN: ETH\_WAN: POS\_PPP =100:93:[96 * (Len\_l3+38)/(Len\_l3+9)]$$

It can be proved that all load sharing groups can be broken down into a combination of these three scheduling units. Assuming that in one sharing group, ETH_LAN takes i shares, ETH_WAN takes j shares, and POS_PPP takes k shares. For a specific load sharing group, i, j, and k are all fixed values (may range from 0 to 127), and the sharing allocation ratio in the load sharing group is:

$$100i: 93j:[96k * (Len\_l3+38)/(Len\_l3+9)]$$

The heterogeneous load sharing may be divided into two steps: in a first step, selecting a type of physical link for load sharing; and in a second step, selecting a specific load sharing member in the same type of physical link. The selection in the first step is crucial, and it is required to dynamically select according to the ratio relation formula.

Firstly, the first step is described, and in the example of Fig. 2, it can be assumed that one load sharing group A includes three ETH_LANs each with 10G bandwidth, two ETH_LANs with 100G bandwidth, five ETH_WANs each with 10G bandwidth, two POS_PPPs each with 40G bandwidth, and one POS_PPP with 10G bandwidth.

The heterogeneous physical links are classified and split in unit of 10G as follows:

ETH_LAN: three ETH_LANs each with 10G bandwidth and two ETH_LANs each with 100G bandwidth, so i = 23.
ETH_WAN: five ETH_WANs each with 10G bandwidth, so j = 5.
POS_PPP: two POS_PPP each with 40G bandwidth and one POS_PPP with 10G bandwidth, so k = 9.

In the forwarding of a router, for each packet using the load sharing group as an output port, if the packet mode is used, a random number N (assuming that N is in the range of 0 to 2^31-1, i.e., the first preset numerical range) may be randomly generated; and if the flow mode is used, a number N' (N' is also in the range of 0 to 2^31-1) is generated according to a specific algorithm based on N-tuple information of the packet.

A control plane needs to generate several key values of the load sharing group A to be used by a forwarding plane for routing, these key values include: weight boundary 100i = 2300 for ETH_LAN, weight boundary 100i +93j = 2765 for ETH_LAN + ETH WAN; and the sum W of the weights of ETH LAN + ETH_WAN + POS_PPP. The calculation of W is as follows:

$$W = 100i + 93j + 96k * (Len\_l3+38)/(Len\_l3+9)$$

$$= 100i + 93j + 96k + 96k * 29/(Len\_l3+9)$$

It can be obtained by substituting i =23, j =5 and k =9, respectively:

$$W = 3629 + 25056/(Len\_l3+9)$$

The first half 3629 of W may be calculated by the control plane, and the second half 25056/(Len_l3+9) needs to be calculated by the forwarding plane of the router because it is related to the packet length.

Subsequently, remainder calculation is performed on the sum W of the weights by using the random number N (or N') to obtain Z, i.e., Z = N%W. The forwarding plane compares Z with each weight boundary (i.e., 100i and 100i +93 j), and if Z is less than or equal to 2300, the packet is shared among ETH_LAN members; if Z is greater than 2300 and less than or equal to 2765, the packet is shared among ETH_WAN members; and if Z is greater than 2765, the packet is shared among the POS_PPP members.

Then, the second step is described, assuming that the packet is shared among the ETH_LAN members, since i =23 (i.e., the above second preset numerical range), the ETH_LAN is divided into 23 members, of which three ETH_LANs each with 10G bandwidth each account for one share, and two ETH_LANs each with 100G bandwidth each account for 10 shares. The remainder of N divided by 23, i.e., N%23, is calculated, and a corresponding one of the 23 members is selected according to the calculated remainder and taken as the actual output port of the load sharing.

According to the load sharing method of the embodiments of the present disclosure, packets are not shared according to the bandwidth ratio of the physical links, but a packet distribution function is constructed, and influence caused by different packet lengths is considered when the packets are distributed to various types of links. The problem of uneven packet sharing among the links in a forwarding model of the router is solved for the existing heterogeneous physical links, particularly under the circumstance of binding an ETH_LAN, an ETH_WAN and a POS_PPP into a same load sharing group, and an algorithm and an implementation scheme for improving the sharing uniformity are provided when the ETH_LAN, the ETH_WAN and the POS_PPP links are bound into the same load sharing group simultaneously under different layer 3 forwarding models (or layer 2 forwarding models).

According to the algorithm and the implementation scheme provided by the present disclosure, the uniformity of load sharing in the case of binding heterogeneous physical links can be greatly improved, so that the bandwidth utilization rates of member ports in a load sharing group can be approximate to each other, the link utilization rate is greatly improved, and the error precision of 5% of the bandwidth utilization rate in the load sharing group provided by an operator can be met.

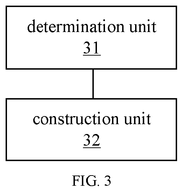

Fig. 3 is a schematic structural diagram of a load sharing device according to an embodiment of the present disclosure.

As shown in Fig. 3, the load sharing device according to an embodiment of the present disclosure may include a determination unit 31 and a construction unit 32.

The determination unit 31 is configured to determine a forwarding number reference ratio of packets between at least two types of links according to line rates and data encoding formats of different links, wherein the forwarding number reference ratio includes a packet length parameter of a packet to be forwarded.

The construction unit 32 is configured to construct a packet distribution function according to the forwarding number reference ratio, such that each packet to be forwarded is distributed, based on the packet length of the packet, to a corresponding link for forwarding according to the packet distribution function.

According to an embodiment of the present disclosure, the construction unit 32 may include an acquisition module, a determination module, and a construction module.

The acquisition module is configured to acquire a total bandwidth of all forwarding interfaces of each type of link in a load sharing group.

The determination module is configured to determine a forwarding number sharing ratio among all types of links in the load sharing group according to the total bandwidth of each type of link and the forwarding number reference ratio.

The construction module is configured to construct the packet distribution function according to the forwarding number sharing ratio.

According to an embodiment of the present disclosure, the construction module may be configured to: map the forwarding number sharing ratio into different data intervals, which take the packet length as a parameter, within a first preset numerical range, respectively; acquire a corresponding random number for each packet to be forwarded or each flow in the packet to be forwarded from the first preset numerical range; and select a data interval within the first preset numerical range according to the random number and the packet length, and distribute the packet to be forwarded to a type of link corresponding to the data interval.

According to an embodiment of the disclosure, the construction module may be further configured to: map a ratio among bandwidths of all interfaces in the type of link into different data intervals in a second preset numerical range; and select a data interval within the second preset numerical range according to the random number, and distribute the packet to be forwarded to an interface corresponding to the data interval.

According to an embodiment of the present disclosure, the at least two types of links include a POS_PPP link and at least one of an ETH_LAN link and an ETH WAN link.

According to an embodiment of the present disclosure, there is also provided a routing device including: a processor and a memory. The memory stores computer instructions which, when executed by the processor, casuse the processor to perform the load sharing method according to the embodiments of the present disclosure.

According to an embodiment of the present disclosure, there is also provided a computer-readable medium having one or more programs stored thereon, and when executing the one or more programs, one or more processers perform the load sharing method according to the embodiments of the present disclosure.

It should be noted that, in the present disclosure, the terms "include", "comprise" or any other variation thereof, are intended to cover a non-exclusive inclusion, such that a process, method, article, or device that includes a list of elements does not include only those elements but may include other elements not expressly listed or inherent to such process, method, article, or device. Without further limitation, an element defined by the phrase "comprising an ... ..." does not exclude the presence of other like elements in a process, method, article, or device that comprises the element.

Through the above description of the implementations, it will be apparent to those skilled in the art that the method in the embodiments described above can be implemented by means of software combined with a necessary general-purpose hardware platform, and of course, can also be implemented by hardware. Based on such understanding, the technical solutions of the present disclosure may be embodied in the form of a software product, the computer software product is stored in a storage medium (e.g., ROM/RAM, magnetic disk, optical disk) and includes several instructions for enabling a terminal device (e.g., a mobile phone, a computer, a server, an air conditioner, a network device, or the like) to execute the method according to the embodiments of the present disclosure.

**Claims**

1. A load sharing method, comprising:

   determining a forwarding number reference ratio of packets between at least two types of links, according to line rates of the at least two types of links, data encoding formats of the at least two types of links, and a packet length parameter of a packet to be forwarded;
   constructing a packet distribution function according to the forwarding number reference ratio; and
   distributing the packet to be forwarded to a corresponding link for forwarding based on a packed length of the packet to be forwarded and according to the packet distribution function; and **characterized in that**:

      wherein the at least two types of links comprise a POS_PPP link and at least one of an Ethernet Local Area Network link and an Ethernet Wide Area Network link, and the line rates of the at least two types of links are fixed values,
      wherein POS_PPP stands for Packed Over SONET/SDH, SONET stands for Synchronous Optical Network, SDH stands for Synchronous Digital Hierarchy, and PPP stands for Point to Point Protocol,
      wherein constructing the packet distribution function according to the forwarding number reference ratio comprises:

         acquiring for each type of link in a load sharing group a total bandwidth of all forwarding interfaces of that type of link;
         determining a forwarding number sharing ratio among all types of links in the load sharing group according to each acquired total bandwidth of each type of link in the load sharing group and the forwarding number reference ratio; and
         constructing the packet distribution function according to the forwarding number sharing ratio, and wherein constructing the packet distribution function according to the forwarding number sharing ratio comprises:

mapping the forwarding number sharing ratio into different weights, wherein a given weight is based on share of the total bandwidth of all forwarding interfaces of a corresponding type of link and a weight of the POS_PPP type of link is further based on the packet length;
summing the different weights into a sum W of the weights;
acquiring a corresponding number N for the packet to be forwarded;
obtaining modulo of N on the basis of W; and
comparing the modulo with each weight boundary of W, and distributing the packet to be forwarded to a type of link corresponding to the weight boundary.

2. The method of claim 1, wherein distributing the packet to be forwarded to the type of link corresponding to the weight boundary comprises: selecting a specific load sharing interface in the same type of link.

3. A load sharing device, comprising:

a determination unit configured to determine a forwarding number reference ratio of packets between at least two types of links, according to line rates of the at least two types of links, data encoding formats of the at least two types of links, and a packet length parameter of a packet to be forwarded;
a construction unit configured to construct a packet distribution function according to the forwarding number reference ratio, and distribute the packet to be forwarded to a corresponding link for forwarding based on a packet length of the packet to be forwarded and according to the packet distribution function; the device being **characterized in that**:

wherein the at least two types of links comprise a POS_PPP link and at least one of an Ethernet Local Area Network link and an Ethernet Wide Area Network link, and the line rates of the at least two types of links are fixed values,
wherein POS_PPP stands for Packed Over SONET/SDH, SONET stands for Synchronous Optical Network, SDH stands for Synchronous Digital Hierarchy, and PPP stands for Point to Point Protocol,
wherein the construction unit comprises:

an acquisition module configured to acquire for each type of link in a load sharing group a total bandwidth of all forwarding interfaces of that type of link;
a determination module configured to determine a forwarding number sharing ratio among all types of links in the load sharing group according to each acquired total bandwidth of each type of link in the load sharing group and the forwarding number reference ratio; and
a construction module configured to construct the packet distribution function according to the forwarding number sharing ratio, and
wherein the construction module is configured to:

map the forwarding number sharing ratio into different weights, wherein a given weight is based on share of the total bandwidth of all forwarding interfaces of a corresponding type of link and a weight of the POS_PPP type of link is further based on the packet length;
sum the different weights into a sum W of the weights;
acquire a corresponding number N for the packet to be forwarded;
obtain modulo of N on the basis of W; and
compare the modulo with each weight boundary of W, and distribute the packet to be forwarded to a type of link corresponding to the weight boundary.

4. The device of claim 3, wherein the construction module is further configured to: select a specific load sharing interface in the same type of link.

5. A routing device, comprising a processor and a memory, wherein the memory stores computer instructions which, when executed by the processor, cause the processor to perform the load sharing method according to claim 1 or 2.

6. A computer-readable storage medium, having one or more programs stored thereon which, when executed by one or more processors, cause the one or more processors to perform the load sharing method of claim 1 or 2.

**Patentansprüche**

1. Verfahren zur Lastverteilung, umfassend:

   Bestimmen eines Weiterleitungsanzahl-Referenzverhältnisses von Paketen zwischen mindestens zwei Verbindungsarten gemäß Leitungsraten der mindestens zwei Verbindungsarten, Datencodierungsformaten der mindestens zwei Verbindungsarten und einem Paketlängenparameter eines weiterzuleitenden Pakets;
   Konstruieren einer Paketverteilungsfunktion gemäß dem Weiterleitungsanzahl-Referenzverhältnis; und
   Verteilen des weiterzuleitenden Pakets an eine entsprechende Verbindung zur Weiterleitung basierend auf einer gepackten Länge des weiterzuleitenden Pakets und gemäß der Paketverteilungsfunktion; und **dadurch gekennzeichnet, dass**:

   wobei die mindestens zwei Verbindungsarten eine POS_PPP-Verbindung und mindestens eine von einer Ethernet Local Area Network-Verbindung und einer Ethernet Wide Area Network-Verbindung umfassen und die Leitungsraten der mindestens zwei Verbindungsarten feste Werte sind,
   wobei POS_PPP für "Packed Over SONET/SDH", SONET für "Synchronous Optical Network", SDH für "Synchronous Digital Hierarchy" und PPP für "Point to Point Protocol" steht,
   wobei das Konstruieren der Paketverteilungsfunktion gemäß dem Weiterleitungsanzahl-Referenzverhältnis umfasst:

   Erfassen einer Gesamtbandbreite aller Weiterleitungsschnittstellen dieser Verbindungsart für jede Verbindungsart in einer Lastverteilungsgruppe;
   Bestimmen eines Weiterleitungsanzahl-Verteilungsverhältnisses unter allen Verbindungsarten in der Lastverteilungsgruppe gemäß jeder erfassten Gesamtbandbreite jeder Verbindungsart in der Lastverteilungsgruppe und dem Weiterleitungsanzahl-Referenzverhältnis; und
   Konstruieren der Paketverteilungsfunktion gemäß dem Weiterleitungsanzahl-Verteilungsverhältnis, und
   wobei das Konstruieren der Paketverteilungsfunktion gemäß dem Weiterleitungsanzahl-Verteilungsverhältnis umfasst:

   Abbilden des Weiterleitungsanzahl-Verteilungsverhältnisses in verschiedene Gewichtungen, wobei eine gegebene Gewichtung auf dem Anteil der Gesamtbandbreite aller Weiterleitungsschnittstellen einer entsprechenden Verbindungsart basiert und eine Gewichtung der POS_PPP-Verbindungsart ferner auf der Paketlänge basiert;
   Summieren der verschiedenen Gewichtungen zu einer Summe W der Gewichtungen,
   Erfassen einer entsprechenden Anzahl N für das weiterzuleitende Paket;
   Erhalten des Modulo von N auf der Basis von W; und
   Vergleichen des Modulo mit jeder Gewichtsgrenze von W und Verteilen des weiterzuleitenden Pakets an eine Verbindungsart, die der Gewichtsgrenze entspricht.

2. Verfahren nach Anspruch 1, wobei das Verteilen des weiterzuleitenden Pakets an die Verbindungsart, die der Gewichtsgrenze entspricht, umfasst: Auswählen einer spezifischen Lastverteilungsschnittstelle in derselben Verbindungsart.

3. Vorrichtung zur Lastverteilung, umfassend:

   eine Bestimmungseinheit, die konfiguriert ist, um ein Weiterleitungsanzahl-Referenzverhältnis von Paketen zwischen mindestens zwei Verbindungsarten gemäß Leitungsraten der mindestens zwei Verbindungsarten, Datencodierungsformaten der mindestens zwei Verbindungsarten und einem Paketlängenparameter eines weiterzuleitenden Pakets zu bestimmen;
   eine Konstruktionseinheit, die konfiguriert ist, um eine Paketverteilungsfunktion gemäß dem Weiterleitungsanzahl-Referenzverhältnis zu konstruieren und das weiterzuleitende Paket an eine entsprechende Verbindung zur Weiterleitung basierend auf einer Paketlänge des weiterzuleitenden Pakets und gemäß der Paketverteilungsfunktion zu verteilen; wobei die Vorrichtung **dadurch gekennzeichnet ist, dass**:

   wobei die mindestens zwei Verbindungsarten eine POS_PPP-Verbindung und mindestens eine von einer Ethernet Local Area Network-Verbindung und einer Ethernet Wide Area Network-Verbindung umfassen und die Leitungsraten der mindestens zwei Verbindungsarten feste Werte sind,

wobei POS_PPP für "Packed Over SONET/SDH", SONET für "Synchronous Optical Network", SDH für "Synchronous Digital Hierarchy" und PPP für "Point to Point Protocol" steht,
wobei die Konstruktionseinheit umfasst:

ein Erfassungsmodul, das konfiguriert ist, um für jede Verbindungsart in einer Lastverteilungsgruppe eine Gesamtbandbreite aller Weiterleitungsschnittstellen dieser Verbindungsart zu erfassen;
ein Bestimmungsmodul, das konfiguriert ist, um ein Weiterleitungsanzahl-Verteilungsverhältnis unter allen Verbindungsarten in der Lastverteilungsgruppe gemäß jeder erfassten Gesamtbandbreite jeder Verbindungsart in der Lastverteilungsgruppe und dem Weiterleitungsanzahl-Referenzverhältnis zu bestimmen; und
ein Konstruktionsmodul, das konfiguriert ist, um die Paketverteilungsfunktion gemäß dem Weiterleitungsanzahl-Verteilungsverhältnis zu konstruieren, und
wobei das Konstruktionsmodul konfiguriert ist, um:

das Weiterleitungsanzahl-Verteilungsverhältnis in verschiedene Gewichtungen abzubilden, wobei eine gegebene Gewichtung auf dem Anteil der Gesamtbandbreite aller Weiterleitungsschnittstellen einer entsprechenden Verbindungsart basiert und eine Gewichtung der POS_PPP-Verbindungsart ferner auf der Paketlänge basiert;
die verschiedenen Gewichtungen zu einer Summe W der Gewichtungen zu summieren;
eine entsprechende Anzahl N für das weiterzuleitende Paket zu erfassen;
den Modulo von N auf der Basis von W zu erhalten; und
den Modulo mit jeder Gewichtsgrenze von W zu vergleichen und das weiterzuleitende Paket an eine Verbindungsart zu verteilen, die der Gewichtsgrenze entspricht.

4. Vorrichtung nach Anspruch 3, wobei das Konstruktionsmodul ferner konfiguriert ist, um: eine spezifische Lastverteilungsschnittstelle in derselben Verbindungsart auszuwählen.

5. Routingvorrichtung, umfassend einen Prozessor und einen Speicher, wobei der Speicher Computeranweisungen speichert, die, wenn sie durch den Prozessor ausgeführt werden, den Prozessor veranlassen, das Verfahren zur Lastverteilung nach Anspruch 1 oder 2 durchzuführen.

6. Computerlesbares Speichermedium, auf dem ein oder mehrere Programme gespeichert sind, die, wenn sie durch einen oder mehrere Prozessoren ausgeführt werden, den einen oder die mehreren Prozessoren veranlassen, das Verfahren zur Lastverteilung nach Anspruch 1 oder 2 durchzuführen.

**Revendications**

1. Procédé de partage de charge, comprenant :

déterminer un ratio de référence de nombre de transmission de paquets entre au moins deux types de liaisons, en fonction de débits de ligne des au moins deux types de liaisons, de formats de codage de données des au moins deux types de liaisons, et d'un paramètre de longueur de paquet d'un paquet à transmettre ;
construire une fonction de distribution de paquets en fonction du ratio de référence de nombre de transmission ; et
distribuer le paquet à transmettre à une liaison correspondante pour transmission sur la base d'une longueur packagée du paquet à transmettre et en fonction de la fonction de distribution de paquets ; et **caractérisé en ce que** :

dans lequel les au moins deux types de liaisons comprennent une liaison POS_PPP et au moins l'une d'une liaison de réseau local Ethernet et d'une liaison de réseau étendu Ethernet, et les débits de ligne des au moins deux types de liaisons sont des valeurs fixes,
dans lequel POS_PPP signifie « Packed Over SONET/SDH », SONET signifie « Synchronous Optical Network », SDH signifie « Synchronous Digital Hierarchy », et PPP signifie « Point to Point Protocol »,
dans lequel construire la fonction de distribution de paquets en fonction du ratio de référence de nombre de transmission comprend :

acquérir pour chaque type de liaison dans un groupe de partage de charge une largeur de bande totale de toutes les interfaces de transmission de ce type de liaison ;

déterminer un ratio de partage de nombre de transmission entre tous les types de liaisons dans le groupe de partage de charge en fonction de chaque largeur de bande totale acquise de chaque type de liaison dans le groupe de partage de charge et du ratio de référence de nombre de transmission ; et construire la fonction de distribution de paquets en fonction du ratio de partage de nombre de transmission, et

dans lequel construire la fonction de distribution de paquets en fonction du ratio de partage de nombre de transmission comprend :

mapper le ratio de partage de nombre de transmission en différentes pondérations, dans lequel une pondération donnée est basée sur le partage de la largeur de bande totale de toutes les interfaces de transmission d'un type de liaison correspondant et une pondération du type de liaison POS_PPP est en outre basée sur la longueur de paquet ;
sommer les différentes pondérations en une somme W des pondérations ;
acquérir un nombre correspondant N pour le paquet à transmettre ;
obtenir le modulo de N sur la base de W ; et
comparer le modulo à chaque limite de pondération de W, et distribuer le paquet à transmettre à un type de liaison correspondant à la limite de pondération.

2. Procédé selon la revendication 1, dans lequel distribuer le paquet à transmettre au type de liaison correspondant à la limite de pondération comprend :
sélectionner une interface de partage de charge spécifique dans le même type de liaison.

3. Dispositif de partage de charge, comprenant :

une unité de détermination configurée pour déterminer un ratio de référence de nombre de transmission de paquets entre au moins deux types de liaisons, en fonction de débits de ligne des au moins deux types de liaisons, de formats de codage de données des au moins deux types de liaisons, et d'un paramètre de longueur de paquet d'un paquet à transmettre ;
une unité de construction configurée pour construire une fonction de distribution de paquets en fonction du ratio de référence de nombre de transmission, et distribuer le paquet à transmettre à une liaison correspondante pour transmission sur la base d'une longueur de paquet du paquet à transmettre et en fonction de la fonction de distribution de paquets ; le dispositif étant **caractérisé en ce que** :

dans lequel les au moins deux types de liaisons comprennent une liaison POS_PPP et au moins l'une d'une liaison de réseau local Ethernet et d'une liaison de réseau étendu Ethernet, et les débits de ligne des au moins deux types de liaisons sont des valeurs fixes,
dans lequel POS_PPP signifie « Packed Over SONET/SDH », SONET signifie « Synchronous Optical Network », SDH signifie « Synchronous Digital Hierarchy », et PPP signifie « Point to Point Protocol »,
dans lequel l'unité de construction comprend :

un module d'acquisition configuré pour acquérir pour chaque type de liaison dans un groupe de partage de charge une largeur de bande totale de toutes les interfaces de transmission de ce type de liaison ;
un module de détermination configuré pour déterminer un ratio de partage de nombre de transmission entre tous les types de liaisons dans le groupe de partage de charge en fonction de chaque largeur de bande totale acquise de chaque type de liaison dans le groupe de partage de charge et du ratio de référence de nombre de transmission ; et
un module de construction configuré pour construire la fonction de distribution de paquets en fonction du ratio de partage de nombre de transmission, et
dans lequel le module de construction est configuré pour :

mapper le ratio de partage de nombre de transmission en différentes pondérations, dans lequel une pondération donnée est basée sur le partage de la largeur de bande totale de toutes les interfaces de transmission d'un type de liaison correspondant et une pondération du type de liaison POS_PPP est en outre basée sur la longueur de paquet ;
sommer les différentes pondérations en une somme W des pondérations ;
acquérir un nombre correspondant N pour le paquet à transmettre ;
obtenir le modulo de N sur la base de W ; et
comparer le modulo à chaque limite de pondération de W, et distribuer le paquet à transmettre à un type de liaison correspondant à la limite de pondération.

4. Dispositif selon la revendication 3, dans lequel le module de construction est en outre configuré pour : sélectionner une interface de partage de charge spécifique dans le même type de liaison.

5. Dispositif de routage, comprenant un processeur et une mémoire, dans lequel la mémoire stocke des instructions informatiques qui, lorsqu'elles sont exécutées par le processeur, amènent le processeur à réaliser le procédé de partage de charge selon la revendication 1 ou 2.

6. Support de stockage lisible par ordinateur, sur lequel sont stockés un ou plusieurs programmes qui, lorsqu'ils sont exécutés par un ou plusieurs processeurs, amènent l'un ou plusieurs processeurs à réaliser le procédé de partage de charge selon la revendication 1 ou 2.

determining a forwarding number reference ratio of packets between at least two types of links according to line rates and data encoding formats of different links, wherein the forwarding number reference ratio includes a packet length parameter of a packet to be forwarded ⟶ S11

constructing a packet distribution function according to the forwarding number reference ratio, such that each packet to be forwarded is distributed, based on the packet length of the packet, to a corresponding link for forwarding according to the packet distribution function ⟶ S12

FIG. 1

Start

forwarding of a router in layer 3, taking load sharing group A as an output port

key values have been generated: 100i, 100i+93j, 100i+93j+96k, 96k*29, etc. according to configuration of the current load sharing group

packet mode or flow mode?

packet mode

flow mode

generating random number N

generating number N' according to a specific algorithm based on N-tuple of the packet

calculating W=100i +93j +96k +96k*29/(Len_l3+9) according to packet length in layer 3 and the calculated key values

Z=N%W

according to the configuration of the load sharing group, ETH_LAN has been hashed into i members, ETH_WAN has been hashed into j members, and POS_PPP has been hashed into k members

Z is less than or equal to 100i?

N

Z is less than or equal to 100i+93j?

N

Y

Y

I=N%i

J=N%j

K=N%k

selecting the port I from ETH_LAN to output the packet

selecting the port J from ETH_WAN to output the packet

selecting the port K from POS_PPP to output the packet

End

FIG. 2

determination unit
31

construction unit
32

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015382279 A1